# EUROPEAN PATENT APPLICATION

(11) **EP 4 769 709 A1**
(43) Date of publication of application: **01.07.2026**
(21) Application number: 25227167.1
(22) Date of filing: 24.12.2025
(51) Int. Cl.: H01M 50/213, H01M 50/242, H01M 50/262, H01M 50/291

(54) **BATTERY CELL HOLDING DEVICE AND BATTERY PACK COMPRISING THE SAME**

(30) Priority: 31.12.2024 CN 202423322267 U
(71) Applicant: Techtronic Cordless GP, Anderson, SC 29621 (US)
(72) Inventor: LI, Sheng Ping, Dongguan City, Guangdong Province (CN)
(74) Representative: Meissner Bolte Partnerschaft mbB

(57) **Abstract**

A battery pack may include a main body, wherein the aforementioned main body includes a back plate, and the aforementioned main body is configured to allow the at least one battery cell to be supported in an axial direction parallel to the orientation of the aforementioned back plate. A battery pack may include at least one set of holding parts connected to the aforementioned main body, corresponding one-to-one with the aforementioned at least one battery cell, wherein each set of the aforementioned holding parts surrounds and holds the corresponding battery cell in the circumferential direction, wherein each set of the aforementioned holding parts is integrally formed with a biasing part, which abuts against the outer periphery of the corresponding battery cell and applies an inward biasing force to the battery cell.

## Description

### Technical Field

Embodiments relate to the field of batteries, particularly to a battery cell holding device. Embodiments also pertain to a battery pack that incorporates the battery cell holding device.

### Summary

Currently, common battery packs in the market are typically equipped with battery cell supports for fixing battery cells. To facilitate assembly, there exists a gap between the accommodating area on the battery cell support and the battery cell itself. This gap can lead to potential shaking of the battery cell during the use of the battery pack. To address this issue, additional rubber plugs are often placed between adjacent battery cells. The rubber plugs fill the space created by the shaking of the battery cells, making them relatively stable. However, these rubber plugs require separate manufacturing processes or sourcing methods, necessitating extra steps for installation into the battery pack, which, in turn, increases the manufacturing costs of the battery pack. Furthermore, the rubber plugs may detach from the battery cell supports, leading to continued movement of the battery cells relative to the battery cell supports.

Therefore, there is a need to provide a battery cell holding device and battery pack to at least partially resolve the aforementioned issues.

Embodiments are directed to a battery cell holding device and a battery pack. The battery cell holding device may be integrally formed with a biasing part, which is capable of pressing the battery cell against the battery cell holding device to avoid shaking while allowing the battery cell to be assembled onto the holding device. This configuration does not require additional compensatory components, thus reducing production costs. In addition, this arrangement avoids the risk of the biasing part detaching and can maintain stability of the battery cell relative to the battery holding device over an extended period.

According to one aspect, a battery cell holding device is provided, wherein the aforementioned battery cell holding device is intended for a battery pack comprising at least one battery cell and is configured to hold the aforementioned at least one battery cell. The aforementioned battery cell holding device comprises:
a body, wherein the aforementioned body includes a back plate, and the aforementioned body is constructed to allow the aforementioned at least one battery cell to be carried along its axial direction parallel to the aforementioned back plate;
at least one set of holding parts connected to the aforementioned body and corresponding one-to-one with the aforementioned at least one battery cell, wherein each set of the aforementioned holding parts surrounds and holds the corresponding battery cell circumferentially; wherein each set of the aforementioned holding parts is integrally formed with a biasing part, and the aforementioned biasing part abuts against the outer periphery of the corresponding battery cell, applying an inward biasing force to the battery cell.

In one embodiment, the aforementioned biasing part may be deformable, thus applying a resilient biasing force to the aforementioned battery cell.

In another embodiment, each set of the aforementioned holding parts includes two holding parts located at the axial ends near the corresponding battery cell, wherein each of the aforementioned holding parts is formed with the aforementioned biasing part.

Specifically, the aforementioned biasing part is in the form of ribs extending along the axial direction of the aforementioned battery cell.

In one embodiment, one end of the aforementioned rib is connected to the aforementioned holding part, while the other end is free; the aforementioned other end abuts against the aforementioned battery cell to apply the aforementioned biasing force. Each set of the aforementioned holding parts includes a first holding part and a second holding part, wherein:
The aforementioned other end of the rib on the aforementioned first holding part is directed away from the aforementioned second holding part, and the aforementioned other end of the rib on the aforementioned second holding part is directed away from the aforementioned first holding part; or
The aforementioned other end of the rib on the aforementioned first holding part is directed toward the aforementioned second holding part, and the aforementioned other end of the rib on the aforementioned second holding part is directed toward the aforementioned first holding part. Specifically, the aforementioned other end of the rib on the aforementioned first holding part directly faces the aforementioned second holding part, and the aforementioned other end of the rib on the aforementioned second holding part directly faces the aforementioned first holding part.

In one embodiment, both ends of the aforementioned rib are connected to the aforementioned holding part, and the center of the aforementioned rib abuts against the aforementioned battery cell to apply the aforementioned biasing force.

In one embodiment, at least two ribs are arranged circumferentially on the top side of each of the aforementioned holding parts.

In one embodiment, at least one protruding limiting part is provided on the inner wall of each of the aforementioned holding parts, preferably with multiple limiting parts arranged circumferentially along the aforementioned inner wall. Specifically, one of the aforementioned limiting parts is located directly below the corresponding aforementioned battery cell.

In one embodiment, the inner wall of the aforementioned at least one limiting part is also formed to surround the circumferential wall of the corresponding battery cell, with each of the aforementioned limiting parts extending an angle of less than 30° in the circumferential direction.

In one embodiment, a second biasing part is provided on the bottom side of each set of the aforementioned holding parts, wherein the aforementioned second biasing part abuts against the outer periphery of the corresponding battery cell and applies a biasing force toward the top side of the battery cell.

In one embodiment, the aforementioned back plate forms at least a portion of the bottom cover of the battery pack, and the bottom cover and the top cover of the aforementioned battery pack engage to jointly define an accommodating space for receiving the aforementioned at least one battery cell.

In one embodiment, along the direction from one end of the aforementioned rib toward the other end, the thickness of the aforementioned rib first increases and then decreases, having its maximum thickness at the point of application, such that the aforementioned rib has the greatest protrusion toward the aforementioned battery cell at the aforementioned point of application. Specifically, the thickness at the very end of the aforementioned rib's other end is consistent with the thickness of the aforementioned fixed end and the thickness of the aforementioned holding part.

According to another aspect, a battery pack is provided, which comprises:
At least one battery cell;
A battery cell holding device as described in any of the above implementations, wherein the aforementioned battery cell holding device is used to accommodate the aforementioned at least one battery cell.

In one embodiment, the aforementioned battery cell holding device forms the bottom of the aforementioned battery pack.

In one embodiment, the aforementioned back plate forms the bottom surface of the aforementioned battery pack.

### Brief Description of the Drawings

To better understand the aforementioned and other objectives, features, advantages, and functions of this disclosure, reference can be made to the preferred embodiments shown in the attached drawings. The same reference numerals in the figures refer to the same components. Those skilled in the art should understand that the figures are intended to illustrate the preferred embodiments of this disclosure schematically and do not impose any limitations on the scope of this disclosure; the various components in the figures are not drawn to scale.
Fig. 1 is a schematic diagram of a battery pack according to an embodiment;
Fig. 2 is a schematic combination diagram of the battery cell holding device and the battery cell in the battery pack of Fig. 1;
Fig. 3 is a separate schematic diagram of the battery cell holding device in Fig. 2;
Fig. 4 is a schematic diagram of the underside view of Fig. 3.
Fig. 5 is a sectional view taken along line A-A in Fig. 2;
Fig. 6 is a partial enlarged view of section B in Fig. 5;
Fig. 7 is a partial enlarged view of section C in Fig. 5;
Fig. 8 is a sectional view taken along line D-D in Fig. 2;
Fig. 9 is a partial enlarged view of section E in Fig. 8;
Fig. 10 is a schematic combination diagram of the battery cell holding device and the battery cell according to another embodiment;
Fig. 11 is a sectional view taken along line F-F in Fig. 10;
Fig. 12 is a partial enlarged view of section G in Fig. 11.

### Reference Numerals in the Attached Figures:

100 Battery pack
10 Top cover
20 Back plate
30, 80 Battery cell holding device
31 Main body
32, 82 Holding part
32a, 82a First holding part
32b, 82b Second holding part
321 Inner wall
322 Limiting part
33, 83 Rib
331 Fixed end
332 Free end
3321, 831 Very end of the free end
3322, 832 Point of application
3323, 833 Portion of the rib near the fixed end
40, 70 Battery cell
50 Side wall
60 Bottom cover

### Detailed Description

Now referring to the attached drawings, the specific implementation methods of this disclosure are described in detail. The methods described here are based on the preferred embodiment of this disclosure; those skilled in the art may conceive other ways to implement this disclosure based on the aforementioned preferred embodiments, and such other ways also fall within the scope of this disclosure.

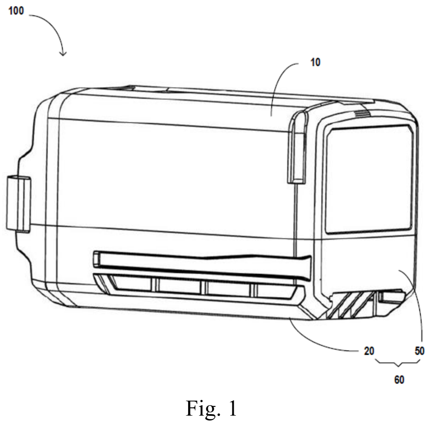

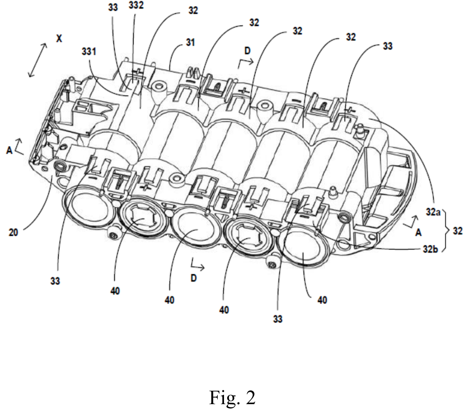

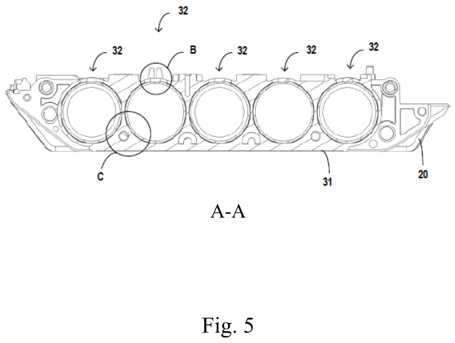

Fig. 1-Fig. 7 illustrate the preferred implementation of the battery cell holding device and battery pack according to this disclosure. First, it should be noted that the directional terms and positional terms used in this disclosure should be understood as relative directions and positions rather than absolute ones. The directional and positional terms in this disclosure can be explained with reference to the exemplary structures shown in Fig. 1-Fig. 7. For example, the axial direction of the battery cell mentioned in this disclosure is represented by X in Fig. 2, while "radial direction" and "circumferential direction" refer to directions relative to the axial direction of each battery cell.

The "top side" referred to in this disclosure refers to the upward side of each structure shown in Fig. 1-Fig. 7, while the "bottom side" refers to the downward side of each structure shown in Fig. 1-Fig. 7.

As shown in Fig. 1, the battery pack 100 of this disclosure includes a top cover 10 and a bottom cover 60, with the top cover 10 and bottom cover 60 joined together to jointly define an accommodating space for receiving at least one battery cell 40. The bottom cover 60 further includes a back plate 20 and a side wall 50. The battery pack 100 also includes a battery cell holding device 30 for holding at least one battery cell 40, where the back plate 20 may form part of the battery cell holding device 30, which will be elaborated upon later.

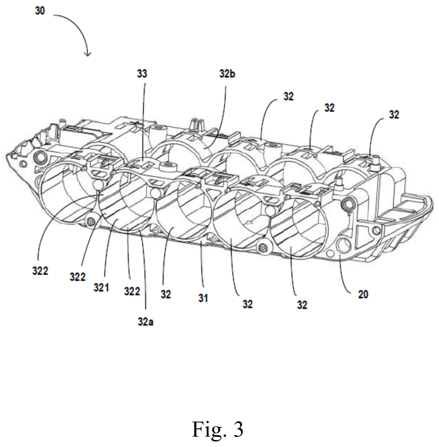

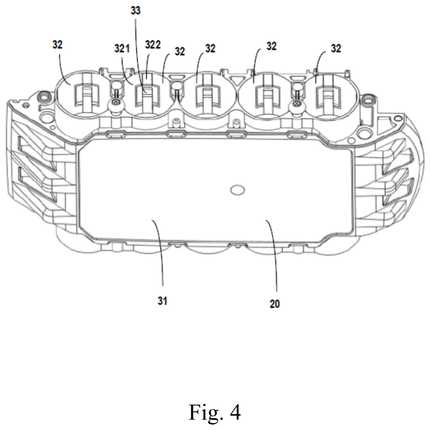

Fig. 2 shows a schematic diagram of the combination of the battery cell holding device 30 and multiple battery cells 40, while Fig. 3 and Fig. 4 show separate perspective diagrams of the battery cell holding device 30. The battery cell holding device 30 includes a main body 31 and at least one set of holding parts 32. The main body 31 includes the back plate 20, and it is constructed to allow at least one battery cell 40 to be carried along the axial direction X parallel to the back plate 20; the back plate 20 constitutes a part of the bottom cover 60 of the battery pack 100. The at least one set of holding parts 32 corresponds to at least one battery cell 40, with each set of holding parts 32 surrounding and holding the corresponding battery cell 40 in the circumferential direction. Specifically, each set of holding parts 32 includes two holding parts 32 located at the vicinity of the axial ends of the corresponding battery cell 40. For example, as shown in Fig. 2, one set of holding parts 32 may include a first holding part 32a and a second holding part 32b.

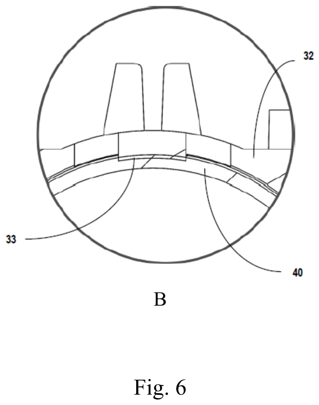

Continuing to refer to Fig. 2-Fig. 4, each holding part 32 integrally forms a biasing part, which abuts against the outer periphery of the corresponding battery cell 40 and applies a biasing force inward toward the battery cell 40. Preferably, the biasing part is formed on the top side of the holding part 32 and applies a biasing force toward the bottom side. The biasing part may, for example, be a rib 33 extending along the axial direction of the battery cell 40. In some implementations, one end of the rib 33 is connected to the holding part 32 (referred to as the fixed end 331), while the other end is free (referred to as the free end 332), with the free end 332 abutting against the battery cell 40 to apply a biasing force to it. There are two options for the position of the free end 332 of the rib 33. One option is illustrated in Figs. 2-4, where the free end 332 of the rib 33 on the first holding part 32a is distant from the second holding part 32b, and the free end 332 of the rib 33 on the second holding part 32b is distant from the first holding part 32a. Fig. 6 shows a sectional view of the engagement state between the rib 33 and battery cell 40, where the rib 33 and battery cell 40 are shown in an interference manner, indicating that the rib 33 and battery cell 40 engage in an interference fit.

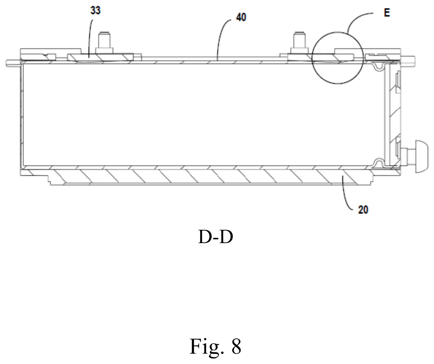

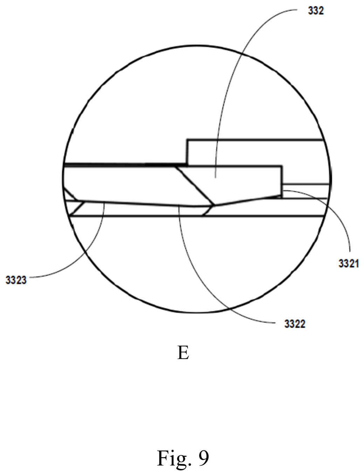

Referring to Fig. 8 and Fig. 9, the free end 332 of the rib 33 has several preferred structures. For example, the thickness of rib 33 gradually increases from the fixed end 331 toward the free end 332 until it begins to decrease at the point of application of force 3322, where the thickness is at its maximum. The point of application of force 3322 has the maximum thickness, meaning it has the greatest degree of protrusion toward the battery cell 40. The thickness at the point of application of force 3322 is greater than the thickness of the part of rib 33 near the fixed end 331 and also greater than the thickness of the very end 3321 of the free end 332. The thickness of rib 33 at the fixed end 331 and at the very end 3321 is approximately equal to the thickness of the holding part 32. This arrangement facilitates the engagement between the battery cell 40 and the rib 33 during the installation process of the battery cell 40 into the battery cell holding device 30, while also ensuring that rib 33 effectively applies force to battery cell 40. Another configuration for the free end 332 of rib 33 is not shown in the figures. In this unillustrated embodiment, for a set of holding parts and the second holding part, the free end of the rib on the first holding part faces the second holding part, while the free end of the rib on the second holding part faces the first holding part. In such an embodiment, the free end of the rib on the first holding part can directly face the second holding part, meaning there are no other structures or parts of the battery holding device between the free end of the rib on the first holding part and the second holding part; similarly, the free end of the rib on the second holding part can directly face the first holding part, meaning there are no other structures or parts of the battery holding device between the free end of the rib on the second holding part and the first holding part.

In some other unillustrated embodiments, both ends of the rib may be connected to the holding part, with the center of the rib recessed downward relative to the two ends, thereby abutting against the battery cell to apply a biasing force to the battery cell.

In various embodiments, the biasing part is an elastic element that applies a biasing force to the battery cell 40 elastically; alternatively, the biasing part can be a rigid component that contacts the battery cell 40 in a rigid manner. In the previously mentioned embodiment where the biasing part is rib 33 with a free end 332, the biasing part typically applies an elastic biasing force to the battery cell 40. If both ends of the biasing part are connected to the holding part, and if the biasing part is relatively thin, it can deform significantly, potentially applying a more elastic biasing force to the battery cell. Conversely, if the biasing part is thicker, its deformation would be limited, possibly resulting in a weaker elastic biasing force applied to the battery cell. In various embodiments, the biasing part makes contact with the battery cell through an interference fit. Even when the biasing part contacts the battery cell 40 via an interference fit, the small contact area between the biasing part and the battery cell 40 still influences the installation of the battery cell 40 into the battery holding device 30.

Because the biasing part can compress the battery cell 40 toward the bottom side, the battery cell 40 is less likely to shake within the accommodating space defined by the corresponding holding part 32, and adjacent battery cells 40 are also less likely to collide.

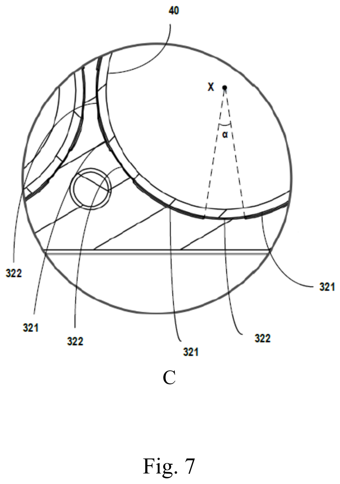

To further enhance the stability of the battery cell 40 within the accommodating space defined by the holding part 32, at least one limiting portion 322 is provided on the inner wall 321 of each holding part 32. Referring to Figures 3-4 and Figures 6-7, there are multiple limiting portions 322, which are arranged circumferentially along the inner wall 321 of the holding part 32. Notably, one of the limiting portions 322 is located directly beneath the corresponding battery cell 40. The limiting portion 322 positioned underneath acts jointly with the rib 33 in the vertical direction on the battery cell 40, further ensuring the stability of the battery cell 40. Preferably, at least one limiting portion 322 has an inner wall formed to surround the corresponding battery cell 40 as a circumferential wall. Since the limiting portion 322 protrudes radially inward relative to other parts of the inner wall 321 of the holding part 32, the distance between the inner wall 321 of the limiting portion 322 and the axis X of the battery cell 40 (see Fig. 7) is smaller than the distance between other parts of the inner wall of the holding part 32 and the axis X of the battery cell 40. Each limiting portion 322 extends circumferentially at an angle α of less than 30° (see Fig. 7).

The gap between the inner wall of the limiting portion 322 and the battery cell 40 is smaller than the gap between the inner wall 321 at other locations of the holding part 32 and the battery cell 40. Therefore, several limiting portions 322 closely fit against the circumferential surface of the battery cell 40 to prevent displacement.

In other unillustrated embodiments, the limiting portion located directly beneath the battery cell may be replaced by another biasing part, referred to as the second biasing part, which abuts against the outer perimeter of the corresponding battery cell and applies a biasing force toward the top side of that battery cell. The second biasing part can have a structure similar to rib 33.

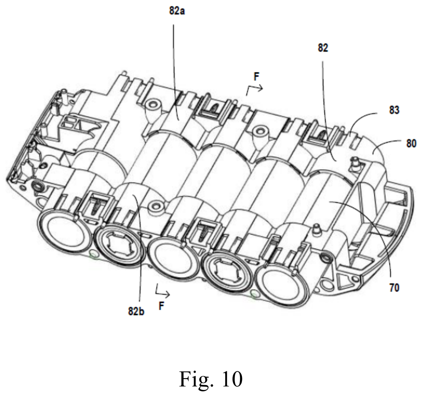

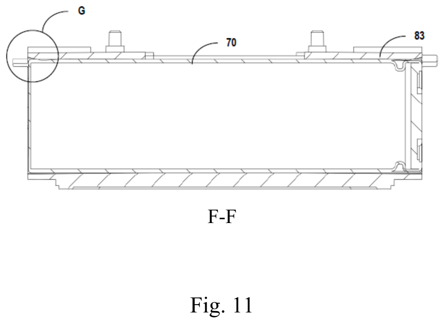

Fig. 10-Fig. 12 illustrate another preferred embodiment according to this disclosure, which is similar to the aforementioned embodiment. For the sake of simplification, the same parts are not reiterated here.

In Fig. 10, each holding part 82 is integrally formed with a biasing part on its top side, which abuts against the outer perimeter of the corresponding battery cell 70 and applies a biasing force toward the bottom side to that battery cell. The biasing part, for example, consists of ribs 83 extending along the axial direction of the battery cell 70. The fixed end of rib 83 is connected to the holding part, and it has a free end that contacts the battery cell 70 to apply a biasing force to that battery cell.

Referring to Fig. 10, for a pair of holding parts 82a and 82b, the free end of the rib 83 on the first holding part 82a faces away from the second holding part 82b, while the free end of the rib 83 on the second holding part 82b faces away from the first holding part 82a. Specifically, the free end of the rib 83 on the first holding part 82a is positioned at the edge of the aforementioned first holding part 82a, and the other end of the rib 83 on the aforementioned second holding part 82b is positioned at the edge of the aforementioned second holding part 82b. During the process of installing the battery cell 70 into the battery holding device 80, the battery cell 70 is inserted into the battery holding device 80 at the free end of the rib 83.

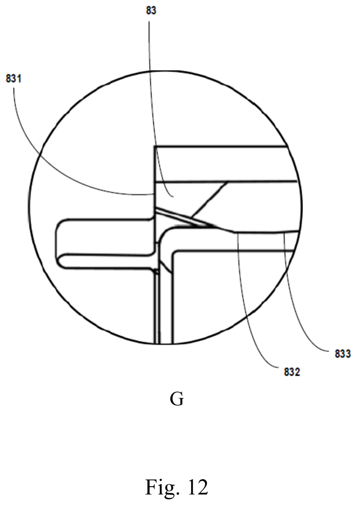

Referring to Fig. 12, the free end of the rib 83 has a preferred structure. For instance, the thickness of rib 83 gradually increases from the fixed end to the free end until it starts to decrease at the maximum thickness point 832. The rib 83 has its maximum thickness at the force application point 832, meaning it protrudes the most toward the battery cell. The thickness at the force application point 832 is greater than the thickness of the portion 833 near the fixed end of the rib and also greater than the thickness of the free end at point 831. The thickness of the rib at the fixed end and at the end point 831 is approximately equal to the thickness of the holding part 82. This design facilitates the engagement between the battery cell and the rib during the installation of the battery cell into the battery holding device, while also ensuring effective force application by the rib on the battery cell.

It should be noted that the "biasing force oriented toward the bottom side (inward)" referred to in this disclosure does not necessarily indicate a force directly downward; as long as there exists a component directed toward the bottom side or inward, it suffices. For example, in some embodiments, two ribs are arranged circumferentially along the upper side of each holding part, neither of which is positioned directly above the battery cell. These two ribs could, for example, be located on either side of the rib 33 shown in Fig. 6. If both of these ribs exert a downward component of biasing force on the battery cell, they can still apply a biasing force oriented toward the bottom side on the battery cell. In other embodiments, three or more biasing parts may be arranged circumferentially along the upper side of each holding part.

In other unillustrated embodiments, the backplate of the battery holding device can be independent of the bottom cover of the battery pack. The bottom cover of the battery pack can have a separate bottom support plate, allowing the battery holding device to be placed on this bottom support plate. A single battery pack can accommodate multiple battery holding devices, which may be stacked in the vertical direction and placed within the receiving space defined collectively by the top cover and the bottom cover.

This disclosure also provides a battery pack, and the description of the preferred embodiment of the battery cell holding device should also be considered as a description of the preferred embodiment of the battery pack.

The battery cell holding device of this disclosure is integrally formed with a biasing part, which can press the battery cell against the battery cell holding device to prevent it from wobbling while allowing for the assembly of the battery cell onto the holding device. This operation does not require additional compensating parts, which can reduce manufacturing costs. Moreover, this setup does not lead to the detachment of the biasing parts, enabling the maintenance of stability between the battery cell and the battery holding device over an extended period.

The above descriptions of various embodiments are provided for illustrative purposes to a person of ordinary skill in the relevant field. They are not intended to exclusively or restrictively be limited to a single disclosed embodiment. As noted, a person of ordinary skill in the art will understand that there are various alternatives and modifications to embodiment disclosed herein. Therefore, although several alternative embodiments are specifically described, those skilled in the art will recognize or readily develop additional embodiments. This disclosure is intended to encompass all alternatives, modifications, and variations described herein, as well as other embodiments that fall within the spirit and scope of this disclosure as described above.

## Claims

1. A battery cell holding device, wherein this battery cell holding device is used for a
battery pack that includes at least one battery cell and is configured to hold the aforementioned at least one battery cell, wherein the aforementioned battery cell holding device comprises:
a main body, wherein the aforementioned main body includes a back plate, and the aforementioned main body is configured to allow the at least one battery cell to be supported in an axial direction parallel to the orientation of the aforementioned back plate;
at least one set of holding parts connected to the aforementioned main body, corresponding one-to-one with the aforementioned at least one battery cell, wherein each set of the aforementioned holding parts surrounds and holds the corresponding battery cell in the circumferential direction,
wherein each set of the aforementioned holding parts is integrally formed with a biasing part, which abuts against the outer periphery of the corresponding battery cell and applies an inward biasing force to the battery cell.

2. The battery cell holding device according to Claim 1, wherein the aforementioned biasing part is deformable, thereby elastically applying a biasing force to the aforementioned battery cell.

3. The battery cell holding device according to either Claim 1 or Claim 2, wherein each set of the aforementioned holding parts includes two holding parts respectively located near the axial ends of the corresponding battery cell, each of which has the aforementioned biasing part formed thereon, specifically, the aforementioned biasing part is a rib extending in the axial direction of the aforementioned battery cell.

4. The battery cell holding device according to any one of Claims 1 to 3, wherein one end of the aforementioned rib is connected to the aforementioned holding part while the other end is free, with the aforementioned other end abutting against the aforementioned battery cell to apply the aforementioned biasing force to the battery cell, and each set of the aforementioned holding parts includes a first holding part and a second holding part, wherein:
the aforementioned rib on the aforementioned first holding part has its aforementioned other end facing away from the aforementioned second holding part, and the aforementioned rib on the aforementioned second holding part has its aforementioned other end facing away from the aforementioned first holding part, specifically, the aforementioned other end of the rib on the aforementioned first holding part is positioned at the edge of the aforementioned first holding part, and the aforementioned other end of the rib on the aforementioned second holding part is positioned at the edge of the aforementioned second holding part; or
the aforementioned other end of the rib on the aforementioned first holding part faces toward the aforementioned second holding part, and the aforementioned other end of the rib on the aforementioned second holding part faces toward the aforementioned first holding part, specifically, the aforementioned other end of the rib on the aforementioned first holding part directly faces the aforementioned second holding part, and the aforementioned other end of the rib on the aforementioned second holding part directly faces the aforementioned first holding part.

5. The battery cell holding device according to any one of Claims 1 to 4, wherein both ends of the aforementioned rib are connected to the aforementioned holding part, with the center of the aforementioned rib abutting against the aforementioned battery cell to apply the aforementioned biasing force to the battery cell.

6. The battery cell holding device according to any one of Claims 1 to 5, wherein at least two ribs are arranged in a circumferential manner on the top side of each aforementioned holding part.

7. The battery cell holding device according to any one of Claims 1 to 6, wherein at least one protruding limiting part is provided on the inner wall of each aforementioned holding part, preferably with multiple limiting parts arranged circumferentially on the aforementioned inner wall, particularly, wherein one of the aforementioned limiting parts is located directly below the corresponding aforementioned battery cell.

8. The battery cell holding device according to Claim 7, wherein the inner wall of the aforementioned at least one limiting part is also formed to surround the circumferential wall of the corresponding battery cell, with each aforementioned limiting part extending in a circumferential angle of less than 30°.

9. The battery cell holding device according to any one of Claims 1 to 8, wherein a second biasing part is provided on the bottom side of each set of the aforementioned holding parts, which abuts against the outer periphery of the corresponding battery cell and applies an upward biasing force to the battery cell.

10. The battery cell holding device according to any one of Claims 1 to 9, wherein the aforementioned back plate constitutes at least a portion of the bottom cover of the battery pack, and the aforementioned bottom cover engages with the top cover of the aforementioned battery pack to jointly define a receiving space for accommodating the aforementioned at least one battery cell.

11. The battery cell holding device according to any one of Claims 1 to 10, in particular to Claim 4, wherein the thickness of the aforementioned rib increases and then decreases from one end toward the other end at the final end, having a maximum thickness at the application point, such that the aforementioned rib has the maximum protrusion toward the aforementioned battery cell at the aforementioned application point, particularly, the thickness of the final end of the aforementioned rib at the aforementioned other end is consistent with the thickness of the aforementioned fixed end and the thickness of the aforementioned holding part.

12. A battery pack, wherein the aforementioned battery pack includes:
at least one battery cell;
a battery cell holding device according to any one of Claims 1 to 11, wherein the aforementioned battery cell holding device is used to accommodate the aforementioned at least one battery cell.

13. The battery pack according to Claim 12, wherein the aforementioned battery cell holding device forms the bottom of the aforementioned battery pack.

14. The battery pack according to either Claim 12 or Claim 13, wherein the aforementioned back plate forms the bottom surface of the aforementioned battery pack.
